Europäisches Patentamt

European Patent Office

Office européen des brevets

(19)

(11) Numéro de publication: **0 063 665**
**B1**

(12) # FASCICULE DE BREVET EUROPEEN

(45) Date de publication du fascicule du brevet:
02.04.86

(51) Int. Cl.⁴: **G 01 K 1/16**, G 01 K 1/14

(21) Numéro de dépôt: 81402061.6

(22) Date de dépôt: 23.12.81

(54) **Prise de température par thermistance pour élément chauffant.**

(30) Priorité: 07.04.81 LU 83286

(43) Date de publication de la demande:
03.11.82 Bulletin 82/44

(45) Mention de la délivrance du brevet:
02.04.86 Bulletin 86/14

(84) Etats contractants désignés:
BE CH DE FR GB IT LI NL SE

(56) Documents cités:
DE - A - 1 573 465
DE - A - 2 107 924
FR - A - 1 569 533
US - A - 3 701 884

VEREIN DEUTSCHER INGENIEURE, BERICHTE, vol.
112: Verein Deutscher Ingenieure-Technische
Temperaturmessung, 1966, pages 103-108, Düsseldorf,
DE., G. TEUNIS: "Messung von
Oberflächentemperaturen mit
Berührungsthermometern"
INSTRUMENT PRACTICE, vol. 20, june 1966, pages
517-524, London, GB

(73) Titulaire: SEB S.A., F-21260 Selongey (FR)

(72) Inventeur: Schwob, Pierre, 55 Avenue des Frères
Lumière, F-69008 Lyon (FR)

(74) Mandataire: Bouju, André, Cabinet Bouju 38 avenue de la
Grande Armée, F-75017 Paris (FR)

**Description**

La présente invention concerne un dispositif de prise de température par une thermistance faisant partie d'un dispositif électronique pour réguler thermiquement un élément chauffant à résistance électrique dont la régulation thermique est réalisée par voie électronique, tel par exemple qu'une semelle de fer à repasser.

On peut selon le DE-A-2 107 924 sceller la thermistance dans un support par exemple en céramique électriquement isolante, et fixer celui-ci dans un orifice pratiqué dans la semelle. Ce procédé a l'inconvénient d'être volumineux et ainsi de constituer, sur la semelle du fer, une protubérance qui dissipe la chaleur et fausse par conséquent la mesure de température.

Les documents VEREIN DEUTSCHER INGENIEURE, BERICHTE, vol. 112: Technische Temperaturmessung, 1966, pages 103–108, et INSTRUMENT PRACTICE, vol. 20, Juin 1966, pages 517–524 enseignent d'interposer un thermocouple dans la masse de l'élément chauffant entre une paroi d'orifice et un bouchon ayant les mêmes propriétés thermiques que la masse.

Cependant, un tel procédé n'est pas directement applicable à une thermistance car celle-ci est beaucoup plus volumineuse et car elle fonctionne sous une tension élevée. Au contraire, les thermocouples qui fonctionnent à des potentiels très faibles permettent l'incorporation directe dans une masse métallique.

Le but de l'invention est ainsi de proposer un dispositif de prise de température par thermistance dans lequel la thermistance soit fidèlement soumise à la température de la masse de l'élément chauffant.

Suivant l'invention, le dispositif est caractérisé en ce que la thermistance est interposée entre un orifice pratiqué dans la masse même de l'élément chauffant et comportant une empreinte partielle de la thermistance, et un bouchon métallique sensiblement de la même nature que la masse et présentant sensiblement la même forme que l'orifice muni de la thermistance, et en ce que la thermistance est habillée d'une gaine thermoplastique rétractable.

La difficulté résolue par l'invention consiste à concilier de façon très économique l'isolation électrique indispensable autour de la thermistance, et le bon contact thermique de la thermistance avec la masse métallique. Sans nécessiter de formage spécifique, la gaine s'applique étroitement contre la thermistance et donne donc à la thermistance gainée une forme bien définie qui peut être ajustée avec précision dans l'empreinte de l'orifice et dans la forme du bouchon.

L'ajustage du bouchon dans son logement est réalisé le plus parfaitement possible, soit par emmanchement serré, ou par fluage de métal, avec adjonction éventuelle d'un mastic.

Le dispositif selon l'invention comporte donc un orifice par exemple rectangulaire dans lequel est engagée après introduction de la thermistance, une pièce métallique également rectangulaire, désignée sous le terme de bouchon. Si l'élément chauffant, qui peut être une semelle de fer à repasser, est en alliage dénommé AS9U3, la pièce rapportée est également en AS9U3, ou en un autre alliage d'aluminium tel que de l'AS13, de l'A5L.

Sur la face inférieure et les deux faces latérales opposées de l'orifice sont creusées respectivement la demi-empreinte de la thermistance et les demi-empreintes des fils de raccordement. Il en est de même sur les faces homologues du bouchon. La pose de la gaine de PTFE étant effectuée par rétraction, aucune poche d'air ne subsiste entre cet isolant et la thermistance.

L'insertion de ce sous-ensemble dans l'empreinte laissée entre le bouchon et l'élément chauffant s'effectue avec l'adjonction de mastic silicone. Ce mastic dont l'excès est chassé lors de l'assemblage des pièces, comble tous les jeux et interstices pouvant exister par exemple le long des angles vifs. Il n'y a donc aucun espace pouvant contenir de l'air. Aucune solution de continuité ne peut donc affecter la transmission thermique.

Pour que le temps de réponse de la thermistance soit très court, la demi-empreinte pratiquée au fond de l'orifice est exécutée sur le tube de blindage de la résistance électrique.

L'invention sera de toute façon bien comprise à l'aide de la description qui suit, relative à un exemple de réalisation. On se référera aux dessins annexés dans lesquels:

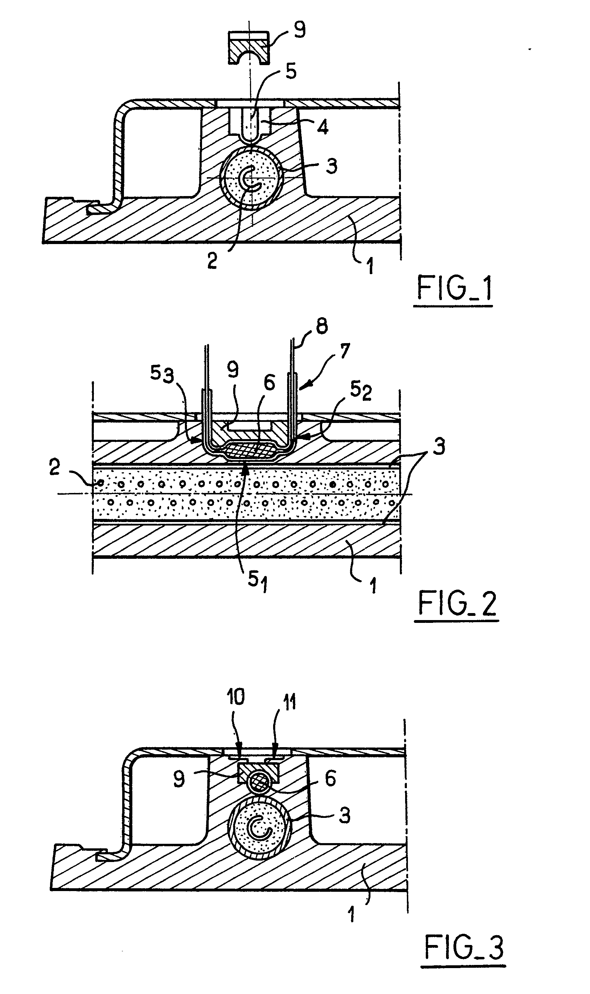

    – la figure 1 est une coupe transversale partielle d'une semelle de fer à repasser;

    – la figure 2 est une coupe longitudinale de cette semelle;

    – la figure 3 est une coupe transversale de la semelle après sertissage du bouchon.

La semelle 1 du fer à repasser comprend une résistance 2 de chauffage incluse dans un tube de blindage 3. Un orifice rectangulaire 4 présente une rainure demi-circulaire 5 sur les faces inférieures 5.1 et latérales 5.2 et 5.3. La rainure inférieure 5.1 est située directement sur le tube de blindage de la résistance. Un léger voile de matière peut cependant subsister, originaire des jeux des pièces constitutives du moule. La thermistance 6, gainée d'un tube de polytétrafluoréthylène rétractable 7 est posée dans la rainure du fond 5.1, les conducteurs de connexions 8 étant logés dans les rainures latérales 5.2 et 5.3. Une goutte de mastic silicone (telle que du silastène) est déposée au fond de l'orifice 4. Un bouchon 9, ayant des formes homologues à celles de l'orifice 4 muni de la thermistance 6, est ensuite glissé dans l'orifice 4 et pressé. L'excès de mastic s'évacue par les interstices dus aux arrondis des pièces qui ne peuvent avoir, dans la pratique, des angles suffisamment vifs. Pour maintenir le bouchon 9 en place on peut l'enfoncer à force dans l'orifice 4, ou, si les tolérances de fabrication sont trop larges, réaliser un sertissage par fluage du métal de la semelle 1, au point 10 et 11.

Tous les contacts de la thermistance à la gaine PTFE et la gaine PTFE à la semelle ou au bouchon 9 se font soit directement, soit par l'entremise du mastic silicone, mais en aucun endroit ne subsiste de poche d'air, d'eau ou de vapeur d'eau.

Bien entendu, l'invention ne se limite pas à l'exemple décrit, mais couvre toutes les variantes mineures à la portée de l'homme de l'art. C'est ainsi que l'invention n'est pas limitée à des thermistances cylindriques ni à des connexions en ligne. Pour les autres configurations de thermistances connues, il suffit de modifier la géométrie de l'orifice 4, des rainures 5 et du bouchon 9. Le mastic de jointoiement peut être remplacé par d'autres produits ayant des caractéristiques de transmission thermique suffisante, telles que des ciments.

**Revendications**

1. Dispositif de prise de température par une thermistance (6) faisant partie d'un dispositif pour réguler thermiquement un élément chauffant à résistance électrique (2) dont la régulation thermique est réalisée par voie électronique, caractérisé en ce que la thermistance (6) est interposée entre un orifice (4) pratiqué dans la masse même (1) de l'élément chauffant et comportant une empreinte partielle (5.1, 5.2, 5.3) de la thermistance, et un bouchon métallique (9) sensiblement de la même nature que la masse (1) et présentant sensiblement la même forme que l'orifice muni de la thermistance (6), et en ce que la thermistance (6) est habillée d'une gaine thermoplastique rétractable (7).

2. Dispositif selon la revendication 1, caractérisé en ce que le bouchon (9) est maintenu par emmanchement dur dans l'orifice (4).

3. Dispositif selon la revendication 1, caractérisé en ce que le bouchon (9) est serti dans l'orifice (4) par fluage du métal de l'élément chauffant (1).

4. Dispositif selon la revendication 1, caractérisé en ce que les interstices et les jeux existants entre l'orifice (4) et le bouchon (9), entre la thermistance (6) et la masse (1) et entre la thermistance (6) et le bouchon (9) sont comblés par un matériau de remplissage bon conducteur de la chaleur.

5. Dispositif selon la revendication 1, caractérisé en ce que la thermistance (6) est pratiquement en appui sur le tube de blindage (3) de la résistance chauffante (2).

6. Dispositif selon la revendication 1, caractérisé en ce que la gaine thermoplastique rétractable (7) est en polytétrafluoréthylène.

7. Dispositif selon la revendication 1, caractérisé en ce que la thermistance (6) est disposée parallèlement à la surface extérieure de l'élément chauffant.

8. Dispositif selon la revendication 1, caractérisé en ce que l'empreinte (5.1, 5.2, 5.3) que présente l'orifice (4) comprend des rainures latérales (5.2, 5.3) pour des conducteurs de connexion (8) de la thermistance (6).

**Claims**

1. Device for temperature detection by means of a thermistor (6) forming part of a device for thermal regulation of a heating element comprising an electric resistor (2) in which thermal regulation is performed electronically, characterized in that the thermistor (6) is interposed between an orifice (4) formed in the actual mass (1) of the heating element and comprising a partial impression (5.1, 5.2, 5.3) of the thermistor, and a metallic plug (9) of substantially the same nature as the mass (1) and having substantially the same shape as the orifice fitted with the thermistor (6) and that the thermistor (6) is encased in a shrinkable thermoplastic sheath (7).

2. Device in accordance with claim 1, characterized in that the plug (9) is maintained by forcefitting in the orifice (4).

3. Device in accordance with claim 1, characterized in that the plug (9) is set within the orifice (4) by creep deformation of the metal of the heating element (1).

4. Device in accordance with claim 1, characterized in that the interstices and clearances existing between the orifice (4) and the plug (9), between the thermistor (6) and the mass (1) and between the thermistor (6) and the plug (9) are filled with a packing material having good heat conductivity.

5. Device in accordance with claim 1, characterized in that the thermistor (6) is practically applied against the shielding tube (3) of the heating resistor (2).

6. Device in accordance with claim 1, characterized in that the shrinkable thermoplastic sheath (7) is of polytetrafluoroethylene.

7. Device in accordance with claim 1, characterized in that the thermistor (6) is placed parallel to the external surface of the heating element.

8. Device in accordance with claim 1, characterized in that the impression (5.1, 5.2, 5.3) formed in the orifice (4) is provided with lateral grooves (5.2, 5.3) for connection conductors (8) of the thermistor (6).

**Patentansprüche**

1. Vorrichtung zur Temperaturabtastung mittels eines Thermistors (6), welcher Bestandteil einer Vorrichtung zur Wärmeregulierung eines mit elektrischem Widerstand (2) versehenen Heizelementes ist, bei welchem die Wärmeregulierung auf elektronischem Wege erfolgt, dadurch gekennzeichnet, dass der Thermistor (6) eingefügt ist zwischen einer Öffnung (4), welche in der Masse (1) des Heizelementes selbst angebracht ist und eine Teilform (5.1, 5.2, 5.3) des Thermistors aufweist, und einem metallischen Stopfen (9), welcher im wesentlichen von gleicher Art wie die Masse (1) ist und im wesentlichen dieselbe Gestalt wie die mit dem Thermistor (6) versehene Öffnung aufweist, und dass der Thermistor (6) durch eine schrumpfbare thermoplastische Hülle (7) überzogen ist.

2. Vorrichtung nach Anspruch 1, dadurch gekennzeichnet, dass der Stopfen (9) durch Einpressen in die Öffnung (4) gehalten ist.

3. Vorrichtung nach Anspruch 1, dadurch gekennzeichnet, dass der Stopfen (9) in der Öffnung (4) durch Fliessen des Metalles des Heizelementes (1) verstemmt ist.

4. Vorrichtung nach Anspruch 1, dadurch gekennzeichnet, dass die Zwischenräume und das Spiel, welche zwischen der Öffnung (4) und dem Stopfen (9), zwischen dem Thermistor (6) und der Masse (1) sowie zwischen dem Thermistor (6) und dem Stopfen (9) verbleiben, durch ein Material von guter Wärmeleitfähigkeit ausgefüllt sind.

5. Vorrichtung nach Anspruch 1, dadurch gekennzeichnet, dass der Thermistor (6) praktisch an dem Abschirmungsrohr (3) des Heizwiderstandes (2) in Anlage ist.

6. Vorrichtung nach Anspruch 1, dadurch gekennzeichnet, dass die schrumpfbare thermoplastische Hülle aus Polytetrafluoräthylen besteht.

7. Vorrichtung nach Anspruch 1, dadurch gekennzeichnet, dass der Thermistor (6) parallel zu der Aussenoberfläche des Heizelementes angeordnet ist.

8. Vorrichtung nach Anspruch 1, dadurch gekennzeichnet, dass die Teilform (5.1, 5.2, 5.3) der Öffnung (4) seitliche Rillen (5.2, 5.3) für Anschlussleiter (8) des Thermistors (6) umfasst.

FIG_1

FIG_2

FIG_3